# DEMANDE DE BREVET EUROPEEN

(11) **EP 0 977 304 A1**
(43) Date de publication de la demande: **02.02.2000**
(21) Numéro de dépôt: 99202385.3
(22) Date de dépôt: 20.07.1999
(51) Int. Cl.: H01Q 1/24, H04B 1/38, H01Q 3/24, H01Q 3/28

(54) **Appareil de communications, équipement radio mobile, station de base et procédé de contrôle de puissance**

(30) Priorité: 28.07.1998 FR 9809651
(71) Demandeur: Koninklijke Philips Electronics N.V., 5621 BA Eindhoven (NL)
(72) Inventeur: Werling, Thierry, 75008 Paris (FR); Bruzzone, Raul, 75008 Paris (FR)
(74) Mandataire: den Braber, Gerard Paul

(57) **Abrégé**

L'invention concerne un appareil de communication de signaux radioélectriques équipé d'une structure d'antenne directive, notamment un radiotéléphone ou une station de base d'un système de téléphonie mobile. L'appareil comporte des moyens de mesure de paramètres d'environnement et des moyens de contrôle d'émission pour réguler la puissance d'émission de la structure d'antenne par rapport à la direction d'émission, en fonction de l'environnement. L'invention permet, par des moyens peu coûteux, de limiter considérablement la puissance des radiations nocives émises par un équipement radio en direction de tissus humains.

Application : radiotéléphones, stations radio de bases.

## Description

L'invention concerne un appareil de communication de signaux radioélectriques comportant:
- des moyens d'émission / réception couplés à une structure d'antenne présentant un diagramme de rayonnement privilégiant certaines directions en émission et
- un dispositif de régulation de puissance commandé par un organe de contrôle pour modifier ledit diagramme de rayonnement.

Elle concerne également un équipement radio mobile susceptible de communiquer avec au moins une station radio de base d'un système de télécommunications radioélectriques, ledit équipement comportant:
- des moyens d'émission / réception de signaux radioélectriques couplés à une structure d'antenne présentant un diagramme de rayonnement privilégiant certaines directions en émission et
- un dispositif de régulation de puissance commandé par un organe de contrôle pour modifier ledit diagramme de rayonnement.

L'invention concerne encore une station radio de base d'un système de télécommunications radioélectriques susceptible de communiquer avec au moins un terminal radio mobile, ladite station comportant :
- des moyens d'émission / réception de signaux radioélectriques couplés à une structure d'antenne présentant un diagramme de rayonnement privilégiant certaines directions en émission et
- un dispositif de régulation de puissance commandé par un organe de contrôle pour modifier ledit diagramme de rayonnement.

Elle concerne enfin un procédé de contrôle de puissance pour contrôler la puissance rayonnée dans une direction donnée par une pluralité d'antennes directives ayant des puissances d'émission respectives.

L'invention a de nombreuses applications dans le domaine des télécommunications par voie radio, notamment en radiotéléphonie. Elle s'applique particulièrement dans les systèmes, dits de troisième génération, fonctionnant selon une norme de type UMTS (de l'anglais Universal Mobile Telecommunications System) utilisant la technique de multiplexage large bande à répartition par code CDMA (de l'anglais Code Division Multiple Access). Des équipements prévus pour de tels systèmes comportent une pluralité d'antennes directives susceptibles d'émettre des radiations nocives absorbées par des tissus humains situés à proximité de ces appareils.

La demande de brevet européen publiée en langue allemande sous le numéro EP 752 735 décrit un appareil du genre mentionné dans le paragraphe introductif comportant des moyens pour limiter la puissance des radiations absorbées par le tissu humain. Il comporte un arrangement d'antennes électriquement relié à une unité de contrôle pour réguler individuellement la puissance d'émission de chaque antenne en fonction de la variation calculée entre l'impédance mesurée au niveau de l'antenne et une valeur de référence correspondant à son impédance en champ libre. Cette différence représente une mesure de la puissance de radiation absorbée par le tissu humain.

La présente invention propose des moyens pour éviter l'émission d'ondes radioélectriques en direction de tissus humains, plus simples à mettre en oeuvre et plus efficaces que ceux décrits dans le document cité. Pour cela, il est prévu un appareil tel que mentionné dans le paragraphe introductif, remarquable en ce qu'il comprend un dispositif de détection de proximité pour mesurer au moins un paramètre d'environnement et fournir à l'organe de contrôle une indication de proximité pour commander le dispositif de régulation de puissance.

Selon une caractéristique importante de l'invention, la structure d'antenne comprend une pluralité d'antennes directives ayant chacune une puissance d'émission dans une direction donnée et le dispositif de régulation de puissance comporte des moyens de contrôle de puissance pour réguler la puissance d'émission des antennes directives.

Selon une autre caractéristique de l'invention, les moyens de contrôle de puissance comprennent des moyens de commutation pour activer / désactiver sélectivement une ou plusieurs antennes directives.

Selon deux modes de réalisation particuliers de l'invention, le dispositif de détection de proximité comprend un détecteur de température et / ou un détecteur d'humidité permettant de distinguer, parmi les différents obstacles aux propagations radioélectriques, une présence humaine d'un obstacle quelconque. Un objet de l'invention étant de limiter l'émission de radiations nocives pour la santé de l'utilisateur, il est très avantageux d'utiliser de tels détecteurs de proximité.

Ces détecteurs présentent en outre deux avantages supplémentaires. De type passif, ils sont inoffensifs pour l'utilisateur puisqu'ils n'émettent aucune onde radio. De plus, ils rendent inutiles les mesures de puissance d'émission et les calculs de différence préconisés par la méthode précédemment citée de calcul de la variation de puissance. Ceux-ci sont non seulement consommateurs d'énergie mais également nocifs, puisqu'ils impliquent d'émettre à une certaine puissance pour faire les mesures avant d'effectuer éventuellement un contrôle de puissance destiné à limiter l'absorption de radiations par l'utilisateur.

La description suivante, faite en regard des dessins ci-annexés, le tout donné à titre d'exemple non limitatif fera bien comprendre comment l'invention peut être réalisée.
La figure 1 est un schéma bloc d'un appareil de communications selon l'invention.
La figure 2 représente un exemple d'équipement radio mobile selon l'invention.
La figure 3 est un schéma bloc d'un mode de réalisation particulier de l'équipement représenté à la figure 2.
La figure 4 est un organigramme pour illustrer un exemple de procédé de contrôle de puissance d'émission selon l'invention.

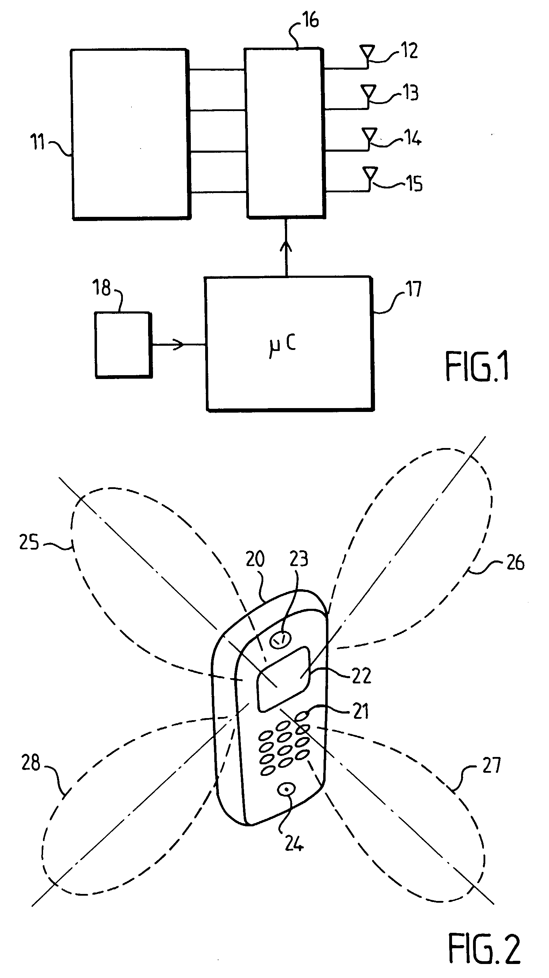

L'exemple représenté à la figure 1 peut être intégré dans un radiotéléphone utilisant plusieurs antennes directives en émission. Il comprend un dispositif d'émission / réception 11, couplé à une pluralité d'antennes directives 12 à 15 (ayant un diagramme de rayonnement privilégiant certaines directions en émission). Chaque antenne est électriquement connectée à un dispositif de régulation de puissance 16, commandé par un organe de contrôle 17. Un tel organe peut être constitué par un microcontrôleur µC convenablement programmé, comprenant une mémoire morte programmable, une mémoire vive, une interface d'entrées / sorties munie de convertisseurs analogique / digital et digital / analogique ainsi que de tous dispositifs nécessaires à l'interface avec les différents éléments périphériques.

Un détecteur de proximité 18 relié à l'organe de contrôle 17 détecte la présence de tissus humains à proximité de l'appareil en mesurant un paramètre d'environnement, tel que la température ou le degré d'humidité, et transmet à l'organe de contrôle 17 un coefficient de proximité caractéristique de l'objet détecté. Un tel détecteur est ainsi capable de différencier un corps humain présentant un certain coefficient d'un autre corps ayant un coefficient différent. La valeur de ce coefficient est analysée par l'organe de contrôle 17 et comparée à des valeurs de consigne stockées par exemple en mémoire morte, pour déterminer, selon leurs directions d'émission privilégiées, quelles sont les antennes directives dont la puissance d'émission doit être réduite et pour déclencher une commande appropriée du dispositif de régulation de puissance 16.

Sous la commande de l'organe de contrôle 17, le dispositif de régulation de puissance 16 sélectionne une ou plusieurs antennes et ajuste leur puissance d'émission en fonction des données fournies par le détecteur 18.

En réception, les puissances générées étant considérablement puis faibles qu'en émission, toutes les directions de radiations peuvent être utilisées sans danger pour l'utilisateur.

Selon un mode de réalisation préféré de l'invention, le détecteur de proximité 18 est un thermomètre à infrarouge de type passif, capable de mesurer la température d'un corps à une distance d'environ une vingtaine de centimètres du détecteur. Une variante consiste à utiliser un détecteur d'humidité.

De préférence, le dispositif de régulation de puissance 16 comprend un dispositif de commutation (non représenté) commandé par l'organe de contrôle 17 pour activer ou désactiver individuellement les antennes sélectionnées et supprimer radicalement la contribution des antennes désactivées dont le diagramme de rayonnement présente un lobe dans la direction d'émission à éviter.

La figure 2 est une vue en perspective d'un radiotéléphone comprenant une structure d'antenne fonctionnant en émission / réception dont le diagramme de rayonnement, schématisé par des lobes principaux, est représenté par des traits en pointillés. L'utilisation d'antennes distinctes en émission et en réception est préconisée lorsque les bandes de fréquences utilisées respectivement pour l'émission et la réception sont trop éloignées pour être compatibles avec la bande passante des antennes. En revanche, la taille de l'appareil doit être adaptée pour recevoir un grand nombre d'antennes, ce qui est actuellement le cas des équipements fonctionnant à des fréquences de l'ordre du giga hertz.

L'exemple illustré par la figure 2 comprend un boîtier 20, un clavier 21, un écran de contrôle 22, un haut-parleur / écouteur 23, un microphone 24 et une structure d'antenne comprenant quatre antennes indépendantes directives en émission, situées à l'intérieur du boîtier 20. Ces antennes sont par exemple constituées de disques en céramique formant un diagramme de rayonnement dont les lobes principaux 25, 26, 27, 28 pointent vers quatre directions orthogonales. Au lieu d'un système à plusieurs antennes indépendamment contrôlables, on peut utiliser une antenne réseau miniaturisée de type 〈〈 phased-array 〉〉 ajustable, comme celle décrite en détails dans le manuel 〈〈 Mobile Antenna Systems Handbook 〉〉, K. Fujimoto et al, Artech House, Inc., 1994, pages 436-451.

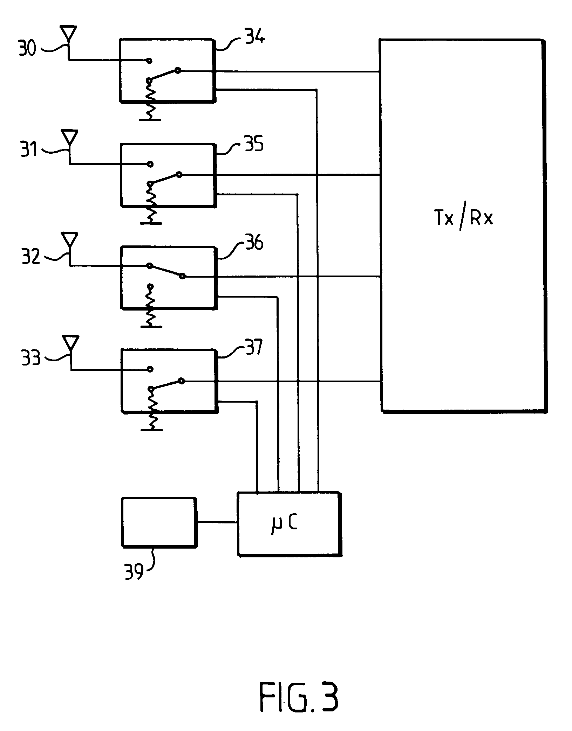

La figure 3 est un schéma bloc illustrant le fonctionnement du radiotéléphone représenté à la figure 2. Les antennes 30 à 33 sont couplées d'une part, à des circuits d'émission / réception, Tx / Rx, au moyen d'un duplexeur, et d'autre part à des commutateurs 34 à 37 commandés par un organe de contrôle µC en fonction des informations qu'il reçoit d'un détecteur de proximité. Les circuits d'émission / réception, connus de l'homme du métier ne seront pas décrits ici. On rappelle simplement qu'un circuit d'émission couplé à une structure d'antenne comporte au moins un amplificateur de puissance. Dans le cas d'une pluralité d'antennes d'émission, le radiotéléphone doit comporter autant d'amplificateurs de puissance et de circuits d'émission que d'antennes dont la puissance d'émission doit être contrôlée indépendamment de celle émise par les autres antennes.

Selon un mode de réalisation préféré de l'invention, la détection par le détecteur de proximité 39, d'un tissu humain, déclenche la commande, par l'organe de contrôle µC, des commutateurs appropriés pour désactiver les antennes dont le diagramme de rayonnement pointe vers la tête de l'utilisateur. Dans l'exemple à quatre antennes représenté à la figure 2, l'antenne générant le lobe 27 devra en général être désactivée.

Pour un usage dans un milieu de propagation favorisant les trajets multiples et / ou dans une région où la densité du réseau de stations de base est élevé, la suppression des antennes d'émission présentant leur lobe principal dans un hémisphère donné ne réduit pas de façon considérable la visibilité des stations de base situées dans cet hémisphère. En effet, dans le premier cas, les réflexions multiples des ondes augmentent leur probabilité d'atteindre leur cible et dans le deuxième cas, la communication peut être établie avec une autre station de base disponible. C'est pourquoi ce mode de réalisation convient particulièrement à une utilisation courante en milieu urbain. En revanche, pour toute autre utilisation, l'ajout d'une antenne omnidirectionnelle peut s'avérer utile pour éviter, le cas échéant, de perdre le contact avec la seule station de base disponible.

Selon un autre mode de réalisation, chaque antenne est reliée à un circuit d'émission propre et les commutateurs sont remplacés par des atténuateurs commandés par l'organe de contrôle pour ajuster la puissance d'émission de chaque antenne en fonction du résultat de la détection de proximité. Ce mode de réalisation exige que chaque antenne soit reliée à un amplificateur de puissance ajustable. Les amplificateurs consommant beaucoup d'énergie, ce mode de réalisation est réservé aux équipements dont la consommation n'est pas critique, comme par exemple des stations de base d'un système de télécommunications mobile.

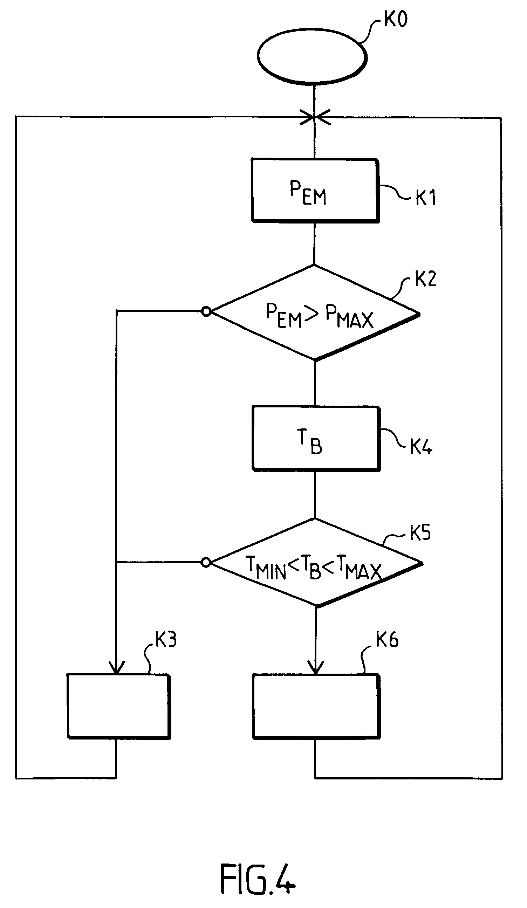

La figure 4 illustre un procédé de contrôle de puissance d'émission pouvant être réalisé par l'organe de contrôle 17 représenté à la figure 1, et intégré dans le radiotéléphone de la figure 2 pour contrôler la puissance émise par une structure d'antennes directives.

Le procédé débute à la case K0. A la case K1, on effectue une lecture de la puissance P_{EM} émise par le radiotéléphone. Cette puissance peut être lue, par exemple, à la sortie de l'amplificateur de puissance du circuit d'émission. A la case K2, la valeur lue P_{EM} est testée et comparée à une valeur de consigne P_{MAX} représentant la puissance de radiation maximale considérée comme inoffensive pour l'utilisateur. Si le résultat du test P_{EM} > P_{MAX} est négatif, le procédé se poursuit à la case K3 où toutes les antennes sont sélectionnées sans régulation de puissance. Si le résultat du test est positif, le procédé se poursuit à la case K4 avec une étape de mesure d'un paramètre d'environnement pour détecter une présence humaine à proximité de l'appareil. Selon le mode de réalisation préféré, cette étape consiste à mesurer la température ambiante T_{B} à l'aide d'un capteur à infrarouge sensible à une distance d'une vingtaine de centimètres environ. Le test effectué à la case K5 constitue une étape de comparaison entre la mesure T_{B} effectuée à l'étape précédente et des valeurs de consigne T_{MIN} et T_{MAX}. Si l'équation T_{MIN} < T_{B} < T_{MAX} est vérifiée, on passe à l'étape K6 pour sélectionner les antennes convenables et réguler leurs puissance d'émission. Sinon, on retourne à la case K3.

On a ainsi décrit et illustré à l'aide d'exemples un appareil de communications, un équipement téléphonique, une station de base ainsi qu'un procédé de contrôle de puissance pour modifier le diagramme de rayonnement d'une structure d'antenne en fonction d'un paramètre d'environnement. Bien entendu, des variantes de réalisation pourront être apportées sans sortir du cadre de l'invention, notamment en ce qui concerne le choix du paramètre d'environnement à détecter et de la structure d'antenne utilisée.

## Revendications

1. Appareil de communication de signaux radioélectriques comportant :
• des moyens d'émission / réception couplés à une structure d'antenne présentant un diagramme de rayonnement privilégiant certaines directions en émission et
• un dispositif de régulation de puissance commandé par un organe de contrôle pour modifier ledit diagramme de rayonnement,
caractérisé en ce qu'il comprend un dispositif de détection de proximité pour mesurer au moins un paramètre d'environnement et fournir à l'organe de contrôle une indication de proximité pour commander le dispositif de régulation de puissance.

2. Appareil selon la revendication 1, caractérisé en ce que la structure d'antenne comprend une pluralité d'antennes directives ayant chacune, une puissance d'émission dans une direction donnée et en ce que le dispositif de régulation de puissance comporte des moyens de contrôle de puissance pour réguler la puissance d'émission des antennes directives.

3. Appareil selon la revendication 2, caractérisé en ce que les moyens de contrôle de puissance comprennent des moyens de commutation pour activer / désactiver sélectivement une ou plusieurs antennes directives.

4. Appareil selon la revendication 1, caractérisé en ce que le dispositif de détection de proximité comprend un détecteur de température.

5. Appareil selon la revendication 1, caractérisé en ce que le dispositif de détection de proximité comprend un détecteur d'humidité.

6. Equipement radio mobile susceptible de communiquer avec au moins une station radio de base d'un système de télécommunications radioélectriques, ledit équipement comportant:
• des moyens d'émission / réception de signaux radioélectriques couplés à une structure d'antenne présentant un diagramme de rayonnement privilégiant certaines directions en émission et
• un dispositif de régulation de puissance commandé par un organe de contrôle pour modifier ledit diagramme de rayonnement,
caractérisé en ce qu'il comprend un dispositif de détection de proximité pour mesurer au moins un paramètre d'environnement et fournir à l'organe de contrôle une indication de proximité pour commander le dispositif de régulation de puissance.

7. Station radio de base d'un système de télécommunications radioélectriques susceptible de communiquer avec au moins un terminal radio mobile, ladite station comportant :
• des moyens d'émission / réception de signaux radioélectriques couplés à une structure d'antenne présentant un diagramme de rayonnement privilégiant certaines directions en émission et
• un dispositif de régulation de puissance commandé par un organe de contrôle pour modifier ledit diagramme de rayonnement
caractérisée en ce qu'elle comprend un dispositif de détection de proximité pour mesurer au moins un paramètre d'environnement et fournir à l'organe de contrôle une indication de proximité pour commander le dispositif de régulation de puissance.

8. Procédé de contrôle de puissance pour contrôler la puissance rayonnée dans une direction donnée par une pluralité d'antennes directives ayant des puissances d'émission respectives,
caractérisé en ce qu'il comprend les étapes suivantes:
• une étape de mesure d'au moins un paramètre d'environnement pour détecter une présence humaine à proximité de l'appareil,
• une étape de comparaison à des valeurs de consigne,
• une étape de sélection d'au moins une antenne directive pour réguler sa puissance d'émission en fonction du résultat de l'étape de comparaison.
